Europäisches Patentamt

European Patent Office

Office européen des brevets

(19)

(11) **EP 0 757 270 B1**

(12) # EUROPEAN PATENT SPECIFICATION

(45) Date of publication and mention
of the grant of the patent:
**10.12.2003  Bulletin 2003/50**

(51) Int Cl.⁷: $G02B\ 7/09$, G02B 7/02,
G06K 7/10

(21) Application number: **96202183.8**

(22) Date of filing: **02.08.1996**

(54) **Autofocusing device**

Autofokusvorrichtung

Dispositif à mise au point automatique

(84) Designated Contracting States:
**AT BE CH DE DK ES FI FR GB GR IE IT LI LU MC
NL PT SE**

(30) Priority: **03.08.1995  NL 1000923**

(43) Date of publication of application:
**05.02.1997  Bulletin 1997/06**

(73) Proprietor: **Scantech International B.V.
3812 RJ Amersfoort (NL)**

(72) Inventors:
• **Van Leeuwen, Stefanie
2324 LZ Leiden (NL)**
• **Mels, Martin
1171 ER Badhoevedorp (NL)**
• **Elferink, Fransiscus Hendricus
2211 MR Noordwijkerhout (NL)**

(74) Representative: **van Westenbrugge, Andries et al
Nederlandsch Octrooibureau
Scheveningseweg 82
P.O. Box 29720
2502 LS Den Haag (NL)**

(56) References cited:
**EP-A- 0 506 071          EP-A- 0 524 349
US-A- 4 302 830          US-A- 4 679 904
US-A- 5 122 644          US-A- 5 291 335
US-A- 5 302 812**

## Description

The present invention relates to an autofocusing device according to the preamble of claim 1, which can be used for, for example, an optical scanner for scanning a code, for example a bar code, on an object.

Such a device is known from the patent publication US 5,122,644. In US 5,122,644 an autofocussing device is described which includes a movable lens to adjust the focussing point of a code scanner. The light source constructs a light (laser) beam which is focussed by the image-forming lens means and the movable lens means. Light returning from objects to be scanned, is reflected by a reflection mirror and intercepted by a holed mirror, which is placed between the light source and the image-forming lens means. The intercepted light beam is reflected by the holed mirror and detected by a light receiving element which is connected to an amplifier. The light beam directly coming from the movable lens means, can pass the holed mirror through the hole without any obstruction.

Patent publication EP 0 506 071 represents a further relevant document.

In photography, autofocussing devices have to meet very specific standards, the most important of which is that the autofocusing must be very accurate, so that photographs taken with a camera provided with such an autofocusing device are still very sharp. Very high standards are not set for the speed at which such autofocusing has to take place in photography. It takes of the order of a few seconds for the lenses in a camera to be focused by means of autofocusing.

An autofocusing device for a scanner for scanning codes on an object has to meet totally different standards. The scanner according to the invention was developed for the industrial market. The autofocusing device according to the invention is suitable for use in, for example, scanners which must be capable of scanning bar codes on packs being moved along on a conveyor belt. The speed of such conveyor belts can be up to 2.5 metres per second. The packs can be of different heights, for example up to 80 cm high. Bar codes with a module width of 220 μm are currently being used in the industry. Scanners which can read such bar codes do exist, but the adjustment of the focusing point is a relatively slow process. The adjustment of the focusing point must therefore start early, i.e. at the point when a moving object is not yet at the shortest distance from the scanner. However, the result of this is that successive objects cannot be placed close together on, for example, a conveyor belt, but must have a large space between them.

The object of the present invention is to provide an autofocusing device which can be used in, for example, scanners for scanning bar codes, which bar codes have a module width of at least 190 μm, and in the case of which the scanning zone can be adjusted from approximately 70 cm to approximately 150 cm, calculated from the autofocusing device, and where the bar codes to be scanned pass the scanning zone at a speed of, for example, 2.5 metres per second.

The invention therefore relates to an autofocusing device of the type set forth above, characterised by the features mentioned in the characterising portion of claim 1.

Such an autofocusing device is relatively simple, because it can consist essentially of one movable lens and one fixed lens. Both the fixed lens means and the movable lens means can consist of one or more sublenses. Situated between the fixed lens means and the movable lens means are light beam interception means provided with a small aperture, for example a diaphragm. Depending on the position of the aperture relative to the movable lens means, part of the light beam transmitted by the movable lens means can be intercepted by the light beam interception means. The diameter of the light beam falling upon the fixed lens means is varied by varying the distance between the movable lens means and the small aperture. It is found that with such an autofocusing device the spot dimension remains constant within reasonable limits when the distance between the focusing point and the autofocusing device is varied from approximately 70 cm to approximately 150 cm. Therefore, objects at a certain distance from the autofocusing device can always be scanned with approximately the same spot diameter.

The light source is preferably a laser source. Using a laser source means that the spot diameter can be kept very small. A spot diameter of 120 μm at the focusing point could be achieved with a focusing distance varying from approximately 70 cm to approximately 150 cm away from the focusing device.

The movable lens means are preferably supported by a lens support fixed to the housing by a mechanical guide, for resilient axial movement of the lens support with the movable lens means along the optical axis. Mechanical guides are known in the art. Mechanical guides with very accurate axial movement and very little radial movement are described in, for example, the international patent application WO-A-94/13976. However, for most applications of an autofocusing device according to the present application it is sufficient for the mechanical guide to comprise a first leaf spring diaphragm and a second leaf spring diaphragm, the second leaf spring diaphragm being disposed at some distance from and substantially parallel to the first leaf spring diaphragm. With such a mechanical guide, a maximum axial movement of 0.53 mm was achieved in practice, while the maximum radial deviation remained less than 6 μm. If less radial deviation is desired, it is possible, for example, to use an identical mechanical guide in mirror image, parallel to and connected to the abovementioned mechanical guide, in which case the radial deviations compensate for each other.

The autofocusing device preferably has a control device, comprising: an actuator for moving the movable lens means in the axial direction, a control unit for supplying a control signal to the actuator, a movement sensor for measuring the movement of the movable lens means and supplying an actual movement signal, a distance meter for measuring the distance from the autofocusing device to a predetermined object and for supplying a desired movement signal, and a comparison unit for comparing the desired and the actual movement signal and supplying an error signal to the control unit.

In such a control device the desired movement signal is thus derived from the observed distance between the autofocusing device and the object on which, for example, a code must be scanned. Said distance is translated into a desired movement signal, which is compared with the actual movement of the movable lens relative to a predetermined reference position. When an error signal is supplied by the comparison unit to the control unit, the actuator receives a message to adjust the movable lens to such a position that the actual movement becomes equal to the desired movement. Therefore, with such a control device, the movement of the movable lens is adjusted by means of a feedback loop. The distance from the focusing point to the autofocusing device achieved in this way does not have to be measured, which in practice is more difficult anyway than measuring the movement of the movable lens means. It is also pointed out that the sensor signal is fast, which is an advantage for the speed of the control circuit. The speed of the movable lens means can be determined in a simple manner by means of a differentiator, which determines the derivative of the position of the movable lens means according to time. By means thereof, the lens means can be speeded up or slowed down in a manner which is known per se at any desired moment (additionally and aperiodically as desired).

The actuator preferably comprises an annular magnet and a coil, for moving the magnet in the axial direction. The magnet is preferably made of neodynium.

Advantageously, the movement sensor can measure the movement of the movable lens means capacitively. Such measurement is in fact fast, and is in keeping with the desire to achieve the adjustment of the focusing point as quickly as possible.

The invention also relates to a bar code scanner which is provided with an autofocusing device of the type defined above. Such bar code scanners can measure with sufficient accuracy bar codes having a module width of 190 μm or more at a distance of approximately 70 cm to approximately 150 cm. It is found that an autofocusing device according to the present invention can easily adjust the focusing point within a period of 20 milliseconds with a deviation of less than 5 cm from the desired distance of the focusing point from the scanner.

The invention will be explained in greater detail below with reference to a number of drawings, illustrating an embodiment of the autofocusing device according to the invention. It is pointed out here that the embodiment shown in the drawings is not intended to limit the scope of the invention, but only to illustrate the basic idea.

Figure 1 shows a general cross-section of an autofocusing device according to the invention;
Figure 2 shows a section of the autofocusing device according to Figure 1 along the line II-II, at the point where a movable lens is suspended from the housing of the autofocusing device by means of a leaf-spring-type guide;
Figures 3a, 3b, 3c and 3d show diagrammatically the principle of the mechanical guide in accordance with preferred embodiments of the invention;
Figures 4a, 4b and 4c indicate diagrammatically how a part of a generated light beam can be intercepted by means of a diaphragm which is provided with a small aperture and is disposed between the movable lens and a fixed lens;
Figures 5a, 5b and 5c show diagrammatically a capacitive measuring device for measuring the movement of the movable lens;
Figures 6 shows a control device for controlling the desired movement of the movable lens.

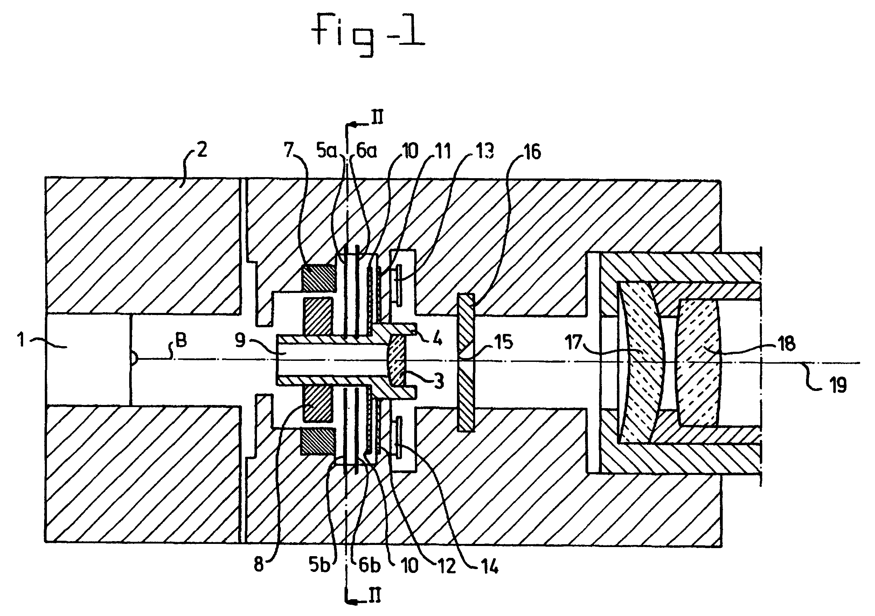

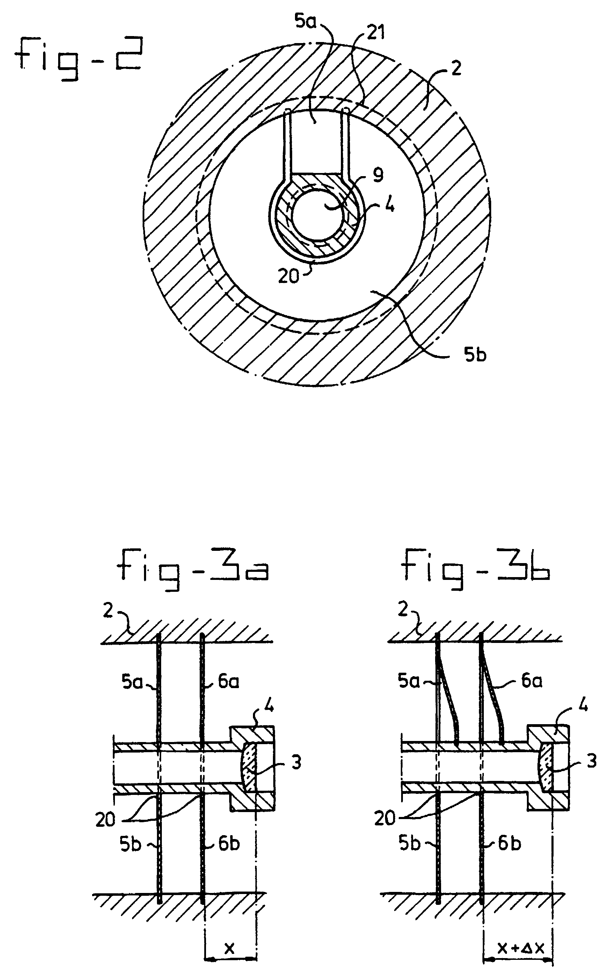

In the diagrammatic cross-section of the autofocusing device shown in Figure 1, reference number 1 refers to a light source, preferably a laser source. During operation, the light source 1 generates a light beam B along an optical axis 19. The device comprises a housing 2, which is preferably made of aluminium. A movable lens 3 is supported by a lens support 4. The lens support 4 is suspended by two parallel leaf spring lips 5a, 6a from the housing 2, as will be explained in greater detail below with reference to Figure 2.

A magnet 8, preferably annular, is fitted around the lens support 4. A very suitable magnetic material is neodynium, because it gives a strong magnetic field, even in the case of a small mass, which is desirable on account of the desired high speed of movement. However, other magnetic materials are also possible. Situated around the magnet 8 is a coil 7, which can be provided with electric current by way of a cable (not shown), in order to generate an electromagnetic force on the magnet 8. The magnet 8, and thus the lens support 4 and the lens 3, can be given a predetermined desired axial movement along the optical axis 19 by setting the correct current through the coil 7 of the magnet 8.

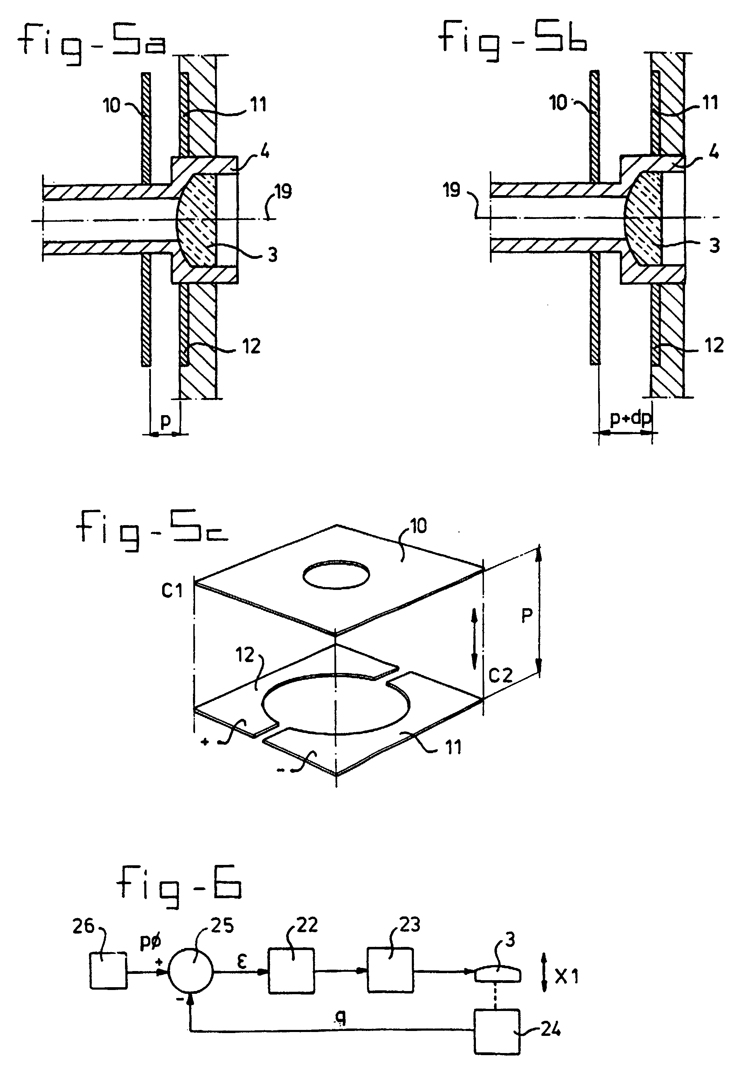

A metal plate 10 is situated around the lens support 4. Two further metal plates 11, 12 are fitted opposite the metal plate 10, on suitable projecting parts of the housing 2. The metal plates 10, 11 and 12 are used for capacitive measurement of the movement of the movable lens 3 relative to a certain reference position, as will be explained in greater detail below with reference to Figures 5a, 5b and 5c. The metal plates 10, 11, 12 can be formed by, for example, vacuum-deposited metal layers on plastic components. The shape of the metal plates 10, 11 and 12 is not limited to the shape shown in Figure 5c.

Reference numbers 13, 14 indicate electronic components for supplying an actual movement signal on the basis of the capacitive movement measurement by means of the metal plates 10, 11 and 12. Further electronic components (not shown) are necessary for controlling the desired axial movement on the basis of the abovementioned movement signal. Light reflected by a bar code is intercepted by a sensor (not shown), which supplies a sensor signal for evaluation means. Such sensors and evaluation means are known in the prior art and form no part of the present invention.

The lens support 4 comprises a suitable aperture 9 around the optical axis 19, for transmission of the light beam B in the direction of the lens 3. Situated downstream of the lens 3 are light beam interception means 16, provided with a small aperture 15 on the optical axis 19. Light beam interception means 16 consist of, for example, a suitable diaphragm.

Situated downstream of the light beam interception means 16 are two lenses 17, 18, for the transmission and correct focusing of the light beam B transmitted through the small aperture 15. Although two lenses 17, 18 are shown in Figure 1, one fixed lens can be provided instead. More than two lenses can also be provided in order to achieve the desired focusing.

Although one movable lens 3 is shown in Figure 1, it can in principle also be replaced by two or more sub-lenses, all of which are supported by the lens support 4.

Figure 2 shows a cross-section along the line II-II of the device shown in Figure 1. Figure 2 therefore shows the suspension of the lens support 4 from the housing 2 by means of a leaf spring lip 5a. The leaf spring lip 5a is preferably a lip-shaped part which is cut out of larger metal disc 5b and is fixed firmly to the lens support 4. The metal disc 5b is preferably accommodated over its entire periphery in the housing 2, as indicated by a dashed line 21 in Figure 2. A gap 20 is provided between the metal disc 5b and the leaf spring lip 5a or the lens support 4, so that the lens support 4 can be moved freely in the axial direction along the optical axis 19.

The suspension of the lens support 4 by means of a leaf spring lip 6a is preferably identical to that of lip 5a, and is not shown in any further detail in the figure.

Figures 3a and 3b show diagrammatically the guiding action of the two leaf spring lips 5a and 6a. The two leaf spring lips 5a and 6a are preferably fitted substantially parallel to each other. In the rest position they lie flat. However, if the coil 7 receives a current, a force will be exerted on the magnet 8, for example in the direction of the light source 1. So long as there is little movement of the lens support 4 in the axial direction, a substantially linear movement can be achieved, in the sense that the lens 3 does not tilt relative to the optical axis 19. With the construction shown in Figures 3a and 3b, an axial movement of 0.53 mm, for example, was achieved in practice, while the vertical movement remained below 6 μm.

If less vertical deviation is needed, a construction of the type shown in Figures 3c and 3d can be used. In the construction according to Figure 3c, two additional leaf spring lips 5c and 6c are fitted, on either side of and parallel to the combination of the leaf spring lips 5a/5b and 6a/6b. The top sides of all leaf spring lips 5a/5b, 5c, 6a/6b, 6c are connected to a wall 2a which is freely movable inside the housing 2. In addition, the lip 5c and the lip 6c are connected to the housing 2 at a projection 28 and 29 respectively, as shown in Fig. 3c. If the lens 3 with its lens support 4 is moved to the right in the construction according to Figure 3c, the leaf-spring-type lips 5a and 6a will undergo a bending such as that shown in Figure 3d, which corresponds to that shown in Figure 3b. However, leaf spring lips 5c and 6c undergo a mirror-image-type bending (see also Figure 3d). Together, they exert a downward force on the wall 2a, which will then move away from the housing 2 in the direction of the arrow p. The radial forces are therefore converted into a radial movement of the wall 2a, and not of the lens support 4 and lens 3. Other guide means which are known from the prior art can also be used in the present invention.

Since a strong magnet 8 is situated in the vicinity of the leaf-spring-type lips 5a. 6a, they must be made of a non-magnetic resilient material.

In Figure 3a the rest position is indicated by x, which shows the distance between the lens 3 and the metal disc 6b from which the leaf-spring-type lip 6a is cut out. In Figure 3b the changed distance is indicated by x+Δx, in which Δx indicates the movement of the movable lens 3.

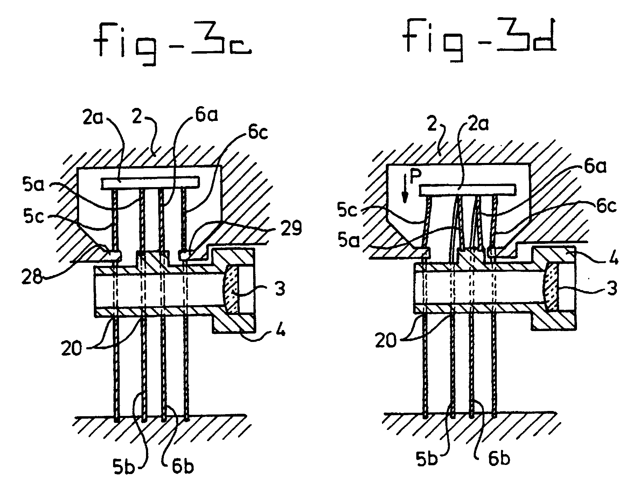

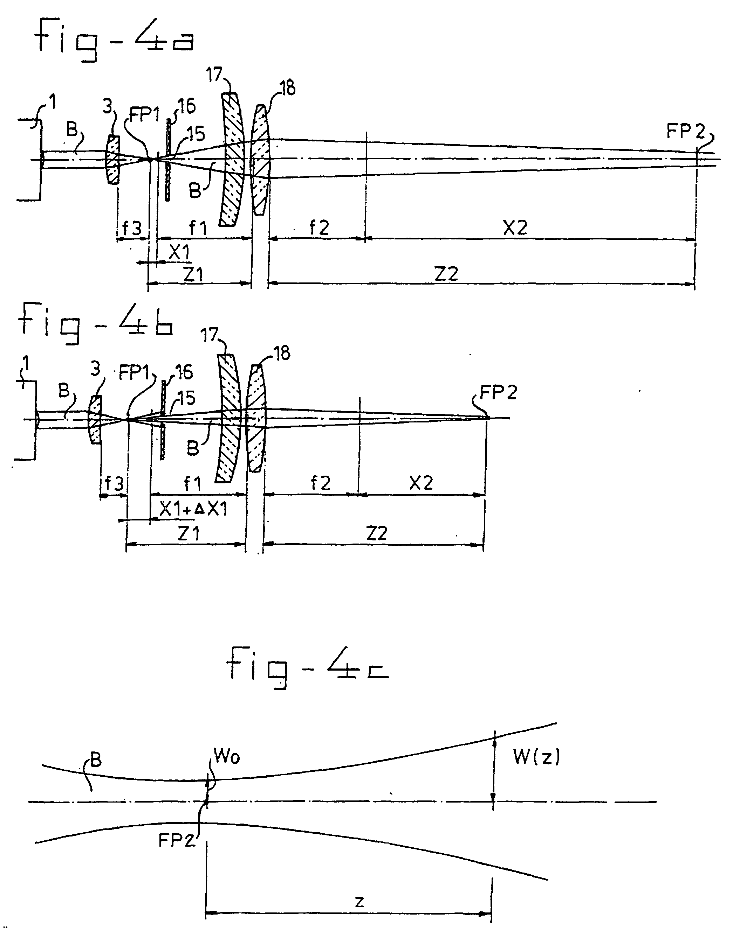

Figures 4a, 4b and 4c show the principle of the distance change between the autofocusing device and the focusing point through movement of the movable lens 3. In these figures the same reference numbers as those in the previous figures represent the same elements of the autofocusing device.

Figures 4a and 4b show that the light beam B leaves the light source 1 as a parallel beam. The parallel light beam B is focused by the movable lens 3. The movable lens 3 has a focal distance f3 in which the light beam B is focused. The focusing point is indicated diagrammatically by FP1.

After the focusing point FP1, the beam B is transmitted as a diverging beam in the direction of the lenses 17, 18. Figure 4a shows the situation in which the light beam B is transmitted as a whole through the small aperture 15 of the light beam interception means 16.

The lenses 17, 18 focus the light beam B in a focusing point FP2. The lenses 17, 18 together have a focal distance f1, viewed in the direction of the movable lens 3, and a focal distance f2, viewed in the direction of the focusing point FP2, f1 being equal to f2. Figure 4a indicates diagrammatically by x2 the distance between the focus at distance f2 from the lenses 17, 18 and the focusing point FP2. The distance between the focus at distance f1 from the lens means 17, 18 and the focusing point FP1 is indicated by x1. The distance between the focusing point FP1 and the optical surface of the lenses 17, 18 is indicated by z1, while the distance between the external surface of the lens 18 and the focusing point FP2 is indicated by z2. The distance z2 can be varied between approximately 70 cm and approximately 150 cm. Figure 4a shows the situation in which the movable lens 3 is situated in its closest position to the light beam interception means 16. In that situation the focusing point FP2 lies at its furthest position from the autofocusing device, i.e. in the situation in which z2 is approximately equal to 150 cm.

Figure 4b shows the situation in which the movable lens 3 has been slid over a distance $\Delta x1$ to the left, with the result that part of the light beam B focused by the movable lens 3 is intercepted by the light beam interception means 16. Only part of the light beam B diverging after the focusing point FP1 is transmitted through the small aperture 15. The remaining transmitted light beam is indicated diagrammatically by B'. Due to the fact that the distance x1 defined above has increased to x1+$\Delta x1$ relative to the situation according to Figure 4a, the focusing point FP2 lies closer to the focusing device than in the situation according to Figure 4a. If the movable lens 3 is situated in the closest position to the light source 1, the distance z2 is minimal, thus in the present case approximately 70 cm.

In the arrangement according to Figure 4a, if the abovementioned focal distances f1 and f2 are of the order of 25 mm, the spot diameter at the focusing point FP2 will be approximately 120 $\mu$m. However, if the light beam interception means 16 were to be omitted in the situation according to Figure 4b, the spot diameter would be approximately 50 $\mu$m in the focusing point FP2. Such a situation is undesirable. The spot diameter should preferably be substantially constant between approximately 70 cm and 150 cm at any setting of the focusing point. The spot diameter must not be too small, otherwise too many details, for example paper fibres, are observed. On the other hand, it must not be too great either, otherwise the resolution is not optimal. The spot diameter is determined by the distance z between the focusing point FP2 and the light beam diameter on the external surface of the lens 18. The following inversely proportional equation is known from optics:

$$W(z) = \frac{\lambda.z}{\pi.WO} \qquad (1)$$

in which:

   $\lambda$ = the wavelength of the laser light used
   z = the distance between the focusing point and the external surface of the lens
   WO = the radius of the beam at the focusing point, and
   W(z) = the beam radius at a distance z from the focusing point.

The definition of the radius of WO and W(z) is based on the value where the light intensity on the radius is equal to $1/e^2$ of the axial value.

The above is illustrated in Figure 4c, which is symmetrical relative to the focusing point. W(z) is, for example, the radius of the beam B' on the external surface of the right side of the lens 18, while WO is the radius of the beam at the focusing point FP2.

It follows from this formula that for a spot diameter of 120 $\mu$m at a distance of 150 cm from the focusing means a larger beam diameter is necessary on the last surface of the lens 18 than for a distance of 70 cm. The presence of the small aperture 15, which intercepts part of the light beam B, produces the desired effect. It is found that the small aperture 15 and the position of the aperture 15 relative to the lens 3 can be dimensioned in such a way that the spot diameter at the focusing point FP2 is approximately equal to 120 $\mu$m both in the situation according to Figure 4a and in that according to Figure 4b. A second effect is also achieved here. A small part of the light received by the object is reflected and received by a sensor (not shown) set up in the vicinity of the autofocusing device. The quantity of light received by the sensor is approximately inversely proportional to the square of the distance between object and sensor, if the quantity of light falling on the object is constant. In addition, there will already be a variation in reflected light, owing to the diversity of objects used. That means extremely strict standards for the range of the analogue amplifier used downstream of the sensor. This can be improved considerably by ensuring that the quantity of light received by the sensor remains more constant as the result of distance variation. To this end, the abovementioned light interception means 16 are dimensioned in such a way that all of the laser light is transmitted at the greatest distance from FP2 to the autofocusing device, while the quantity of light at shorter distances from FP2 is limited gradually and in the correct proportion by the abovementioned interception means.

Using simple optical laws, it can be deduced that the following equation applies for the distances x1 and x2 (see Figures 4a and 4b):

$$x2 = K1/x1 \qquad (2)$$

in which

   K1 = a constant.

Therefore, it follows from the latter that x2 is inversely proportional to the movement of the movable lens 3.

The metal plate 10 and the two metal plates 11 and 12 opposite it are used for measuring the axial movement of the movable lens 3. Figure 5a shows the metal plates 10, 11, 12 and the movable lens 3 supported by the lens support 4 in its most upright position, i.e. the position in which the distance p between the metal plate 10 and the two metal plates 11 and 12 is minimal. Figure 5b shows the situation in which the distance p, as shown in Figure 5a, has increased to a distance p+$\Delta$p. In Figure 5c the metal plates 10, 11 and 12 are shown in perspective view, omitting all the other parts of the autofocusing device. Figure 5c shows diagrammatically that a capacitance C1 is present between the plates 10 and 12, while a capacitance C2 is present between the plates 10 and 11. The capacitance values of the capacitances C1, C2 depend on the distance p between the metal plate 10 and the two metal plates 11, 12. Changing the distance p causes both the capacitance values of the capacitance C1 and of the capacitance C2 to change. Therefore, the total capacitance between the plates 11 and 12 changes when the distance p is changed. The advantage of the construction shown in Figures 5a to 5c is that only the fixed metal plates 11 and 12 need be electrically connected, while the movable metal plate 10 needs no voltage connection.

It follows from simple electronic laws that a capacitive movement sensor has been produced by means of the metal plates 10, 11, 12, which sensor can supply an electrical signal q which is inversely proportional to the distance p:

$$q = K2/p \qquad (3)$$

in which:

K2 = constant.

The electrical signal q can be either a voltage or a current. Since the change in the distance p is equal to the change in the distance x1, the signal q is also inversely proportional to the movement of the movable lens 3.

It goes without saying that the distance between the metal plates 10 and 11 and that between the metal plates 10 and 12 need not be equal to each other. However, this is preferable for the calculations and for a control device for controlling the desired movement of the movable lens 3.

Figure 6 shows a control device for controlling the movement of the movable lens 3. Figure 6 shows a distance meter 26 for determining the distance between the autofocusing device according to the invention and the object (not shown). The distance meter 26 supplies an output signal p0, which can be interpreted as the desired movement of the movable lens 3. The desired movement signal p0 is fed to a comparison unit 25, which also receives the abovementioned electrical signal q from a movement sensor indicated by 24. The movement sensor 24 preferably comprises the capacitive movement sensor according to Figures 5a to 5c. Comparison unit 25 deducts the signal q from the signal p0 and produces a difference signal $\varepsilon$. The difference signal $\in$ is fed to a control unit 22, which on the basis thereof supplies a control signal for an actuator 23. The actuator preferably consists of the coil 7 and the annular magnet 8, as shown in Figure 1. The actuator 23 consequently moves the movable lens 3 depending on the value of the difference signal $\in$.

Apart from the above equation (2) for x2, depending on x1, and equation (3) for q, depending on p, the following two equations apply:

$$q = p0-\varepsilon \qquad (4)$$

$$p = x1+\alpha \qquad (5)$$

In equation (5) $\alpha$ indicates the dissimilarity between the metal plates 10 and 11, and 10 and 12, and the distance x1 between the focal points f1 and f3 (see Figure 4a). If in the rest position the value of p (Figure 5c) is made equal to the value x1 (see Figure 4a), the result is $\alpha$ = 0.

The control unit 22 is preferably also set in such a way that the value of the difference signal $\varepsilon$ remains equal to zero (i.e. the control unit 22 has a high amplification factor). In that case, and in the case where $\alpha$ = 0, the following equation is derived from the equations (2) to (5):

$$x2 = p0 . K1/K2 \qquad (6)$$

In that case there is, in other words, a linear relation between the distance x2 of the focusing point FP2 from the focus f2 (see Figure 4a) and the signal p0, which represents a desired movement signal for the movable lens 3. This result is therefore obtained through the fact that there is an inversely proportional relation between the distances x2 and x1, and this inversely proportional relation is, as it were, compensated for by the capacitive movement sensor 24, which supplies an electrical signal q, which in turn is inversely proportional to the value x1. The capacitive movement sensor can be of any known form, although that according to Figures 5a to 5c has proved suitable. The control device shown in Figure 6 is simple and makes a feedback loop in which the actual distance between the focusing point FP2 and the focusing device is measured unnecessary. It is sufficient to use the movement of the movable lens 3 as feedback variable.

Finally, it is further pointed out that the circuit components 25 and 22 shown in Figure 6 can also be implemented by means of suitable software in a microcomputer.

## Claims

1. Autofocusing device comprising a housing (2), a light source (1) for generating a light beam (B) along an optical axis (19), movable lens means (3) disposed on the optical axis (19), for receiving and transmitting the light beam (B) coming from the light source (1), and having a predetermined first focal distance (f3), image-forming lens means (17,18) disposed on the optical axis (19), for receiving and focussing the light beam (B) coming from the movable lens means (3) in a focussing point (FP2), the location of the focussing point (FP2) being determined by the location of the movable lens means (3) along the optical axis (19), in which point (FP2) the light beam (B) has a focussing point radius (WO), the image-forming lens means (17, 18) having a predetermined second focal distance (f1), the first (f3) and second (f1) focal distances being situated at a predetermined first distance (x1) from each other on the optical axis (19), and light beam interception means (16) provided with a small aperture (15) around the optical axis, which light beam interception means (16) are disposed between the movable lens means (3) and the image-forming lens means (17, 18),
**characterized in that** depending on the position of the aperture (15) relative to the movable lens means (3), part of the light beam (B) transmitted by the movable lens means (3) can be intercepted by the light beam interception means (16), such that said focussing point radius (WO) remains substantially constant for a predetermined range of locations of said focussing point (FP2).

2. Autofocusing device according to Claim 1, **characterized in that** the light source is a laser source (1).

3. Autofocusing device according to Claim 1 or 2, **characterized in that** the movable lens means (3) are supported by a lens support (4) fixed to the housing (2) by a mechanical guide (5a, 5b, 6a, 6b), for resilient axial movement of the lens support (4) with the movable lens means (3) along the optical axis (19).

4. Autofocusing device according to Claim 3, **characterized in that** the mechanical guide comprises a first leaf spring diaphragm (5a) and a second leaf spring diaphragm (6a) , the second leaf spring diaphragm (6a) being disposed at some distance from and substantially parallel to the first leaf spring diaphragm (5a).

5. Autofocusing device according to one of the preceding claims, **characterized in that** it also comprises an actuator (23) for moving the movable lens means (3) in the axial direction, a control unit (22) for supplying a control signal to the actuator (23), a movement sensor (24) for measuring the movement of the movable lens means (3) and supplying an actual movement signal, a distance meter (26) for measuring the distance from the autofocusing device to a predetermined object and for supplying a desired movement signal, and a comparison unit (25) for comparing the desired and the actual movement signal and supplying an error signal to the control unit (22).

6. Autofocusing device according to Claim 5, **characterized in that** the actuator comprises an annular magnet (8) and a coil (7), for moving the magnet (8) in the axial direction.

7. Autofocusing device according to Claim 6, **characterized in that** the magnet (8) is made of neodynium.

8. Autofocusing device according to one of Claims 5, 6 or 7, **characterized in that** the movement sensor (24) measures the movement of the movable lens (3) means capacitively.

9. Bar code scanner provided with an autofocusing device according to one of the preceding claims.

## Patentansprüche

1. Autofokusvorrichtung, umfassend ein Gehäuse (2), eine Lichtquelle (1) zum Erzeugen eines Lichtstrahls (B) entlang einer optischen Achse (19), bewegliche Linsenmittel (3), welche auf der optischen Achse (19) angeordnet sind und eine vorgegebene erste Brennweite (f3) aufweisen, zum Empfangen und Übertragen des Lichtstrahls (B), welcher von der Lichtquelle (1) kommt, Bild erzeugende Linsenmittel (17, 18), welche auf der optischen Achse (19) angeordnet sind, zum Empfangen und Bündeln des Lichtstrahls (B), welcher von den beweglichen Linsenmitteln (3) kommt, in einem Brennpunkt (FP2), wobei der Standort des Brennpunkts (FP2) durch den Standort der beweglichen Linsenmittel (3) entlang der optischen Achse (19) bestimmt wird, an welchem Punkt (FP2) der Lichtstrahl (B) einen Brennpunktradius (WO) aufweist, wobei die Bild erzeugenden Linsenmittel (17, 18) eine vorgegebene zweite Brennweite (f1) aufweisen, die erste (f3) und die zweite (f1) Brennweite auf der optischen Achse (19) in einer vorgegebenen ersten Entfernung (x1) voneinander angeordnet sind, und Lichtstrahlenabfangmittel (16), welche mit einer kleinen Öffnung (15) um die optische Achse (19) versehen sind, wobei die Lichtstrahlenabfangmittel (16) zwischen den beweglichen Linsenmittel (3) und den Bild erzeugenden Linsenmitteln (17, 18) angeordnet sind,

**dadurch gekennzeichnet, dass** in Abhängigkeit von der Position der Öffnung (15) in Bezug auf die beweglichen Linsenmittel (3) ein Teil des Lichtstrahls (B), welcher durch die beweglichen Linsenmittel (3) übertragen wird, durch die Lichtstrahlenabfangmittel (16) so abgefangen werden kann, dass der Brennpunktradius (WO) für einen vorgegebenen Bereich von Standorten des Brennpunkts (FP2) im Wesentlichen konstant bleibt.

2. Autofokusvorrichtung nach Anspruch 1, **dadurch gekennzeichnet, dass** die Lichtquelle eine Laserquelle (1) ist.

3. Autofokusvorrichtung nach Anspruch 1 oder 2, **dadurch gekennzeichnet, dass** die beweglichen Linsenmittel (3) durch einen Linsenträger (4) getragen werden, welcher am Gehäuse (2) durch eine mechanische Führung (5a, 5b, 6a, 6b) zur elastischen axialen Bewegung des Linsenträgers (4) mit den beweglichen Linsenmitteln (3) entlang der optischen Achse (19) befestigt ist.

4. Autofokusvorrichtung nach Anspruch 3, **dadurch gekennzeichnet, dass** die mechanische Führung eine erste Blattfederblende (5a) und eine zweite Blattfederblende (6a) umfasst, wobei die zweite Blattfederblende (6a) in einer gewissen Entfernung von der und im Wesentlichen parallel zu der ersten Blattfederblende (5a) angeordnet ist.

5. Autofokusvorrichtung nach einem der vorhergehenden Ansprüche, **dadurch gekennzeichnet, dass** sie auch ein Betätigungselement (23) zum Bewegen der beweglichen Linsenmittel (3) in der axialen Richtung, eine Steuereinheit (22) zum Liefern eines Steuersignals an das Betätigungselement (23), einen Bewegungssensor (24) zum Messen der Bewegung der beweglichen Linsenmittel (3) und Liefern eines tatsächlichen Bewegungssignals, einen Entfernungsmesser (26) zum Messen der Entfernung von der Autofokusvorrichtung zu einem vorgegebenen Objekt und zum Liefern eines gewünschten Bewegungssignals, sowie eine Vergleichseinheit (25) zum Vergleichen des gewünschten mit dem tatsächlichen Bewegungssignal und Liefern eines Fehlersignals an die Steuereinheit (22) umfasst.

6. Autofokusvorrichtung nach Anspruch 5, **dadurch gekennzeichnet, dass** das Betätigungselement einen ringförmigen Magneten (8) und eine Spule (7) zum Bewegen des Magneten (8) in der axialen Richtung umfasst.

7. Autofokusvorrichtung nach Anspruch 6, **dadurch gekennzeichnet, dass** der Magnet (8) aus Neodymium hergestellt ist.

8. Autofokusvorrichtung nach einem der Ansprüche 5, 6 oder 7, **dadurch gekennzeichnet, dass** der Bewegungssensor (24) die Bewegung der beweglichen Linsenmittel (3) kapazitiv misst.

9. Strichcodeleser, welcher mit einer Autofokusvorrichtung nach einem der vorhergehenden Ansprüche versehen ist.

**Revendications**

1. Dispositif à mise au point automatique comportant un corps (2), une source de lumière (1) générant un rayon lumineux (B) le long d'un axe optique (19), un équipement de lentille mobile (3) disposé sur l'axe optique (19) pour recevoir et transmettre le rayon lumineux (B) venant de la source de lumière (1) et ayant une première distance focale prédéterminée (f3), un équipement de lentille pour la formation de l'image (17, 18) disposé sur l'axe optique (19) pour recevoir et focaliser le rayon lumineux (B) venant de l'équipement de lentille mobile (3) en un point de focalisation (FP2), la position du point de focalisation (FP2) étant déterminée par la position de l'équipement de lentille mobile (3) sur l'axe optique (19), point (FP2) auquel le rayon lumineux (B) a un rayon de point de focalisation (WO), l'équipement de lentille pour la formation de l'image (17, 18) ayant une seconde distance focale prédéterminée (f1), la première (f3) et la seconde (f1) distances focales étant situées à une première distance prédéterminée (x1) l'une de l'autre sur l'axe optique (19), et un moyen d'interception (16) du rayon lumineux muni d'une petite ouverture (15) autour de l'axe optique, ledit moyen d'interception (16) du rayon lumineux étant disposé entre l'équipement de lentille mobile (3) et l'équipement de lentille pour la formation de l'image (17, 18),

   **caractérisé en ce que**,

   en fonction de la position de l'ouverture (15) par rapport à l'équipement de lentille mobile (3), une partie du rayon lumineux (B) transmis par l'équipement de lentille mobile (3) peut être intercepté par le moyen d'interception (16) du rayon lumineux, de sorte que ledit rayon du point de focalisation (WO) reste sensiblement constant pour une plage prédéterminée de positions dudit point de focalisation (WO).

2. Dispositif à mise au point automatique selon la revendication 1, **caractérisé en ce que** la source de lumière est une source laser (1).

3. Dispositif à mise au point automatique selon la revendication 1 ou 2, **caractérisé en ce que** l'équipement de lentille mobile (3) est supporté par un support de lentille (4) fixé sur le corps (2) par l'intermédiaire d'un guidage mécanique (5a, 5b, 6a, 6b) permettant un mouvement axial élastique du support de lentille (4) avec l'équipement de lentille mobile (3) le long de l'axe optique (19).

4. Dispositif à mise au point automatique selon la revendication 3, **caractérisé en ce que** le guidage mécanique comporte un premier diaphragme-ressort élastique (5a) et un second diaphragme-ressort élastique (6a), le second diaphragme-ressort élastique (6a) étant disposé à une certaine distance du premier diaphragme-ressort élastique (5a) et sensiblement parallèle à celui-ci.

5. Dispositif à mise au point automatique selon l'une des revendications précédentes, **caractérisé en ce qu'**il comporte également un actionneur (23) déplaçant l'équipement de lentille mobile (3) dans la direction axiale, une unité de commande (22) fournissant un signal de commande à l'actionneur (23), un capteur de mouvement (24) mesurant le mouvement de l'équipement de lentille mobile (3) et fournissant un signal correspondant au mouvement réel, un appareil de mesure de distance (26) mesurant la distance du dispositif à mise au point automatique à un objet prédéterminé et délivrant un signal correspondant au mouvement désiré, et une unité de comparaison (25) comparant le signal du mouvement désiré et celui du mouvement réel et fournissant un signal d'erreur à l'unité de commande (22).

6. Dispositif à mise au point automatique selon la revendication 5, **caractérisé en ce que** l'actionneur comprend un aimant annulaire (8) et une bobine (7) déplaçant l'aimant (8) dans la direction axiale.

7. Dispositif à mise au point automatique selon la revendication 6, **caractérisé en ce que** l'aimant (8) est réalisé en néodyme.

8. Dispositif à mise au point automatique selon l'une des revendications 5, 6 ou 7, **caractérisé en ce que** le capteur de mouvement (24) mesure le mouvement de l'équipement de lentille mobile (3) de manière capacitive.

9. Lecteur de code à barres pourvu d'un dispositif à mise au point automatique selon l'une des revendications précédentes.

Fig-1

EP 0 757 270 B1

fig-2

fig-3a

fig-3b

fig-3c

fig-3d

# Fig-4a

# Fig-4b

# Fig-4c

fig-5a

fig-5b

fig-5c

fig-6